# EUROPEAN PATENT APPLICATION

(11) **EP 4 679 028 A1**
(43) Date of publication of application: **14.01.2026**
(21) Application number: 24188299.2
(22) Date of filing: 12.07.2024
(51) Int. Cl.: G01B 9/02015, G01B 11/16

(54) **A FIBER INTERFEROMETER MEASUREMENT SYSTEM AND A METHOD**

(71) Applicant: Nederlandse Organisatie voor toegepast-natuurwetenschappelijk Onderzoek TNO, 2595 DA 's-Gravenhage (NL)
(72) Inventor: De Jong, Willem, 2595 DA 's-Gravenhage (NL); Cheng, Lun-Kai, 2595 DA 's-Gravenhage (NL); Van Neer, Paul Louis Maria Joseph, 2595 DA 's-Gravenhage (NL); Quesson, Benoit André Jacques, 2595 DA 's-Gravenhage (NL)
(74) Representative: V.O.

(57) **Abstract**

The invention relates to an fiber interferometer measurement system for measuring a change in a fiber length. The system comprises a broadband type excitation light source, and a lead fiber provided with a pair of integrated optical reflectors with overlapping reflection spectrum, such as FBGs, defining a sensing fiber section therebetween having a variable fiber length. The lead fiber is associated with the excitation light source for being illuminated by said excitation light source. Further, the system comprises a detection 3 × 3 interferometer associated with the lead fiber for converting light received from the pair of integrated optical reflectors into an interferometric signal.

## Description

The present invention relates to a fiber interferometer measurement system for measuring a change in a fiber length, comprising an excitation light source, a lead fiber provided with a pair of integrated optical reflectors, such as FBGs, defining a sensing fiber section therebetween having a variable fiber length.

Fiber interferometer measurement systems for measuring a change in a fiber length are known e.g. from patent publication WO 2022/066002 A1 in the name of the applicant, e.g. for application in the medical field.

Fiber interferometer measurement system are also used in the field of non-destructive ultrasonic testing, such as for example for the detection of delamination, damage, stiffness changes and/or rust in large structures such as bridges, industrial structures or offshore structures. Specifically, the fiber interferometer measurement system can be applied for receiving guided acoustic or elastic waves in non-destructive ultrasonic testing.

In principle, a variable fiber length between integrated optical reflectors can be determined by measuring a total length between the individual reflectors and a measurement setup, and subsequently computing a difference between both total lengths. Then, multiple narrow linewidth lasers operating at mutually different wavelengths, e.g. having a linewidth that typically is smaller than 10 MHz at 15550 nm operating wavelength, are applied while the respective reflectors are generally interrogated with an interrogation signal having mutual different wavelengths exploiting the advantage that the reflectors can be selected to be mainly transparent for a wavelength to which the other reflector is responsive. Although the measuring principle provides satisfying results, an obtained signal noise ratio might be a moderate.

It is an object of the invention to provide an improved fiber interferometer measurement system for measuring a change in a fiber length. It is in particular an object of the invention to provide a fiber interferometer measurement system having an improved signal noise ration. It is also in particular an object of the invention to provide a fiber interferometer measurement system enabling effective measurements of multiple pairs of reflectors on a lead fiber without adding lasers to the measurement system.

Thereto, according to an aspect of the invention, a fiber interferometer measurement system for measuring a change in a fiber length is provided, comprising an excitation light source, a lead fiber provided with a pair of integrated optical reflectors, such as FBGs with overlapping reflection spectrum, defining a sensing fiber section therebetween having a variable fiber length, wherein the lead fiber is associated with the excitation light source for being illuminated by said excitation light source, and a detection 3 x 3 interferometer associated with the lead fiber for converting light received from the pair of integrated optical reflectors into an interferometric signal, wherein the excitation light source is a broadband type light source to avoid direct interference in the lead fiber between the reflection of the pair of optical reflectors.

By applying a detection 3 x 3 interferometer a change in the fiber length of the sensing fiber section between both reflectors can be determined in a single measurement, thereby improving its sensitivity as a full common mode rejection can be obtained because the overlapping spectrum of the reflectors. In a particular embodiment, e.g. when using a regularly available broadband light source, the noise floor may be limited to roughly -103 dB rad / -.J Hz. Then, the signal to noise ratio can be improved considerably compared to the known system performing separate, multiple laser wavelengths measurements suffering from optical dispersion effects leading to a non common mode behavior of the lead fiber as well as instability of the laser wavelengths, for the long optical path difference in the interferometric measurements. It is noted that, within this application, an optical length of a fiber is defined as the product of N_{eff} and Lₛ, wherein N_{eff} is the effective refractive index of the fiber and Lₛ is a physical length of the fiber.

Further, by implementing the excitation light source as a broadband type light source, such as a mode locked laser with spectral line spacings smaller than the reflection spectrum of the reflectors, a lower noise floor can be achieved than using a broadband light source with continuous spectrum.

Using the broadband light source, a system design is obtained enabling multiplexing ability, e.g. in terms of wavelength domain multiplexing and/or time domain multiplexing, thereby enabling effective measurements of multiple pairs of reflectors with each a reflection spectrum with different center wavelengths within the spectrum of the broadband light source, on a lead fiber without adding lasers to the measurement system.

In a first embodiment, the integrated optical reflectors are low reflectivity type reflectors, wherein the detection 3 x 3 interferometer is arranged to have an optical path difference that is twice the optical length of the sensing fiber section, in particular such that the detection 3 x 3 interferometer is arranged to convert a change in the optical length of the sensing fiber section into a phase change value in the interferometric signal. Then, the detection 3 x 3 interferometer may be arranged for detecting an optical parameter change, in particular an optical phase change, caused by a fiber length change of the sensing fiber section, and for converting said optical parameter change into the interferometric signal.

Here, a coherence length related to a spectrum of the low reflectivity type reflectors is selected to be shorter than twice the optical length of the sensing fiber section, e.g. five or more times shorter than twice the optical length of the sensing fiber section, to avoid direct interference between the reflection from the two reflectors in the lead fiber.

In a second embodiment, the integrated optical reflectors are high reflectivity type reflectors forming a Fabry-Perot cavity along the sensing fiber section, wherein the detection 3 x 3 interferometer is arranged to have an optical path difference converting a wavelength change of the transmitted spectrum caused by a length change of the Fabry-Perot cavity into a phase change value in the interferometric signal. Then, the detection 3 x 3 interferometer may be arranged for detecting an optical parameter change, in particular an optical wavelength change, caused by a fiber length change of the sensing fiber section, and for converting said optical parameter change into the interferometric signal.

Advantageously, the lead fiber includes a first and a second pair of integrated optical wavelength selective reflectors, the first pair of reflectors having a first central wavelength being responsive the broadband excitation light source, the second pair of reflectors having a second central wavelength being responsive to the broadband excitation light source, thereby exploiting that the system is wavelength domain multiplexing enabled.

Alternatively or additionally, the broadband excitation light source may be operated as a pulsed light source, also exploiting the system is time domain multiplexing enabled.

The reflectors may have a reflection spectrum that is uniform or has a Gaussian shape. Alternatively, the reflection spectrum of the reflectors have a non-uniform shape, such as a pi-shift shape, an asymmetric shape or a relatively broad shape, thereby enabling spectral coding, in analogy to acoustical coded excitation in combination with cross correlation.

In a particular embodiment, the detection 3 x 3 interferometer may be provided with a path length modulator to optimize the optical phase difference to an optical phase change or an optical wavelength change to be detected, thereby rendering the system optimized for interrogating both low reflectivity type optical reflectors as well as are high reflectivity type reflectors forming a Fabry-Perot cavity along the sensing fiber section.

The invention also relates to a method of performing a fiber interferometer measurement for measuring a change in a fiber length.Other advantageous embodiments according to the invention are described in the following claims.

The invention will be further elucidated on the basis of exemplary embodiments which are represented in the drawings. The exemplary embodiments are given by way of non-limitative illustration of the invention. In the drawings:
Fig. 1 shows a schematic view of a first embodiment of a fiber interferometer measurement system according to the invention;
Fig. 2 shows a schematic view of a second embodiment of a fiber interferometer measurement system according to the invention, and
Fig. 3 shows a flow chart of an embodiment of a method according to the invention.

In the figures identical or corresponding parts are represented with the same reference numerals. The drawings are only schematic representations of embodiments of the invention, which are given by manner of non-limited examples.

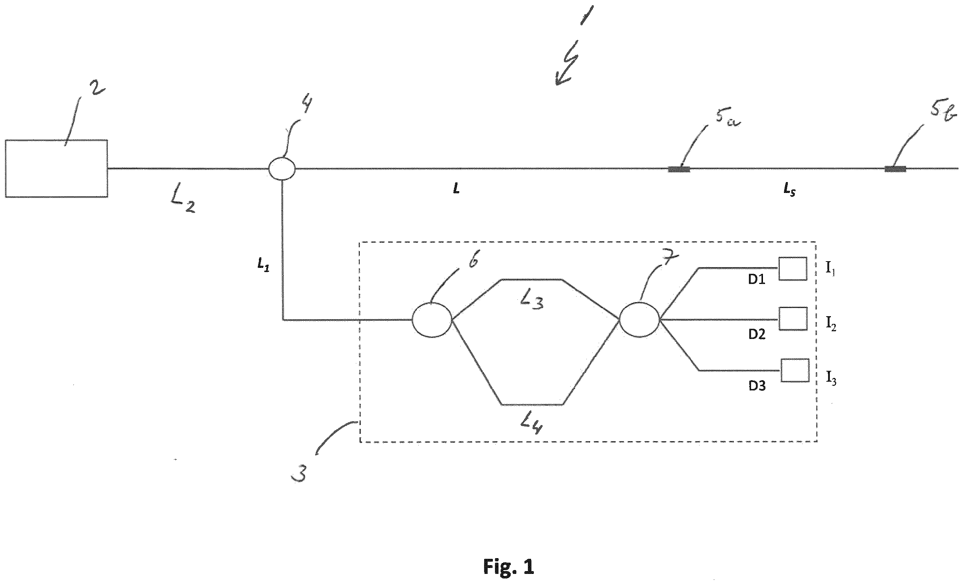

Figure 1 shows a schematic view of a first embodiment of a fiber interferometer measurement system 1 according to the invention. The system 1 includes an excitation light source 2, a lead fiber L and a detection 3 x 3 interferometer 3. The lead fiber L is associated with the excitation light source for being illuminated by said excitation light source 2.

In the shown first embodiment, the system 1 further includes a first fiber section L₁, a second fiber section L₂ and an optical circulator 4. Referring to Fig. 1, the optical circulator 4 is connected to the lead fiber L. Further, the first fiber section L₁ interconnects the optical circulator 4 to the detection 3 x 3 interferometer 3, while the second fiber section L₂ interconnects the excitation light source 2 to the optical circulator 4.

The lead fiber L is provided with a pair of integrated optical reflectors 5a,b defining a sensing fiber section Lₛ therebetween. Said sensing fiber section Lₛ has a variable fiber length of which the change/variation is to be measured by the fiber interferometer measurement system 1. Thereto, the detection 3 x 3 interferometer 3 is associated with the lead fiber L for converting light received from the pair of integrated optical reflectors 5a,b into a interferometric signal I₁, I₂, I₃. The optical reflectors 5a,b can be implemented as so-called low reflectivity reflectors, e.g. FBGs, with overlapping reflection spectrum.

The system 1 is arranged for measuring a change in a fiber length, in particular for measuring a change in the variable fiber length of the sensing fiber section Lₛ.

In the shown embodiment, the detection 3 x 3 interferometer 3 includes a beam splitter 6, a third fiber section L₃, a fourth fiber section L₄, a 3 x 3 beam combiner 7 and three optical detectors D₁, D₂, D₃ generating Interferometric signals I₁, I₂, I₃. Here, the beam splitter 6 is connected, at an input side, to the first fiber section L₁. Further, both the third and the fourth fiber sections L_{3,4} are interconnected between an output side of the beam splitter 6 and an input side of the 3 x 3 beam combiner or coupler 7, forming parallel paths between the beam splitter 6 and the 3 x 3 beam combiner 7. The three optical detectors D₁, D₂, D₃ are connected to the 3 x 3 beam combiner 7, at an output side thereof.

It is noted that the third and/or the fourth fiber sections L_{3,4} can be implemented, in principle, as other light guiding structures, e.g. optical waveguides.

During operation of the fiber interferometer measurement system, the excitation light source 2 generates a light beam travelling through the second fiber section L₂ and the optical circulator 4 illuminating the lead fiber L. The light beam is reflected by the pair of integrated optical reflectors 5a,b, in particular forming a first reflected light beam generated by a first integrated optical reflector 5a and a second reflected light beam generated by a second integrated optical reflector 5b having an offset relative to the first integrated optical reflector 5a equal to twice the variable fiber optical length of the sensing fiber section Lₛ.

Both the first and the second reflected light beam travel back to the optical circulator 4 and are redirected subsequently, via the first fiber section L₁, to the detection 3 x 3 interferometer 3. It is noted that the first and the second reflected light beam with the same center wavelength, the second fiber L₂, the lead fiber L and the first fiber L₁ are common, without any optical dispersion effect of the fibers.

The detection 3 x 3 interferometer 3 is dimensioned such that the optical path difference of the third and the fourth fiber sections L_{3,4} mainly matches with twice the optical length of the sensing fiber section Lₛ. Due to the parallel structure of the third and the fourth fiber sections L_{3,4}, in total four light beams arrive at the 3 x 3 beam combiner 7. Upon proper choice of a coherence length of the excited reflected light beam only a single interference between two light beams remains that is detected by the three detectors D₁, D₂, D₃. In particular, the coherence length related to the spectrum of the low reflectivity type reflectors 5 is selected to be shorter than twice the optical length of the sensing fiber section Lₛ. Assuming the 3 x 3 beam combiner or coupler 7 is symmetric, the three detectors D₁, D₂, D₃ measure signals having a phase that is 2 π / 3 offset to each other resulting into three interferometric signals I₁, I₂, I₃. From the three interferometric signals I₁, I₂, I₃ a phase ϕ of the interference signals can be derived that is related to the optical path difference of the third and the fourth fiber sections L_{3,4} minus twice the variable optical fiber length of the sensing fiber section Lₛ. Then, by deriving a variation in the phase ϕ also a corresponding variation in the variable fiber length of the sensing fiber section Lₛ can be determined, similar as described in more detail in the article entitled "Fiber interferometer combining sub-nm displacement resolution with miniaturized sensor head" published on 23 April 2017 in Proceedings SPIE 10323, 25th International Conference on Optical Fiber Sensors. As an example, for an operational wavelength of 1550 nm, a variation in the free space optical distance between two reflectors relative to a variation of the phase ϕ can be 123 nm / rad.

Then, the detection 3 x 3 interferometer is arranged for detecting an optical parameter change, in particular an optical phase ϕ change caused by a fiber length change of the sensing fiber section Lₛ, and for converting said optical parameter change into the interferometric signal of which the phase is related to the change in the fiber length.

As the measurement to both optical reflectors 5a,b is carried out using their reflections simultaneously, a common mode signal from the lead fiber L and the first fiber section L₁ is eliminated such that a noise floor is very limited, e.g. down to roughly -103 dB rad / -.J Hz. On the other hand, a measurement of a length change of the variable fiber length of the sensing fiber section Lₛ can be performed with high accuracy.

In the described embodiment, the first and the second optical low reflectivity reflector 5a,b have been selected to reflect the light that illuminates the lead fiber L, i.e. the first and the second reflector 5a,b have the same or largely overlapping spectral reflectivity within the spectral profile of an interrogating light signal generated by the excitation light source 2.

Referring to the system 1 shown in Fig. 1, the integrated optical reflectors 5a,b are low reflectivity type reflectors, wherein the detection 3 x 3 interferometer 3 is arranged to have an optical path difference, i.e. a difference in the optical path length of the third fiber section L₃ and the fourth fiber section L₄, that is approximate to twice the optical fiber length of the sensing fiber section Lₛ, in particular to an average fiber length thereof.

According to an aspect of the invention, said excitation light source 2 is a broadband type light source, such as a mode locked laser preferably with spectral line spacings smaller than the reflection spectrum of the reflectors, enabling multiplexing ability.

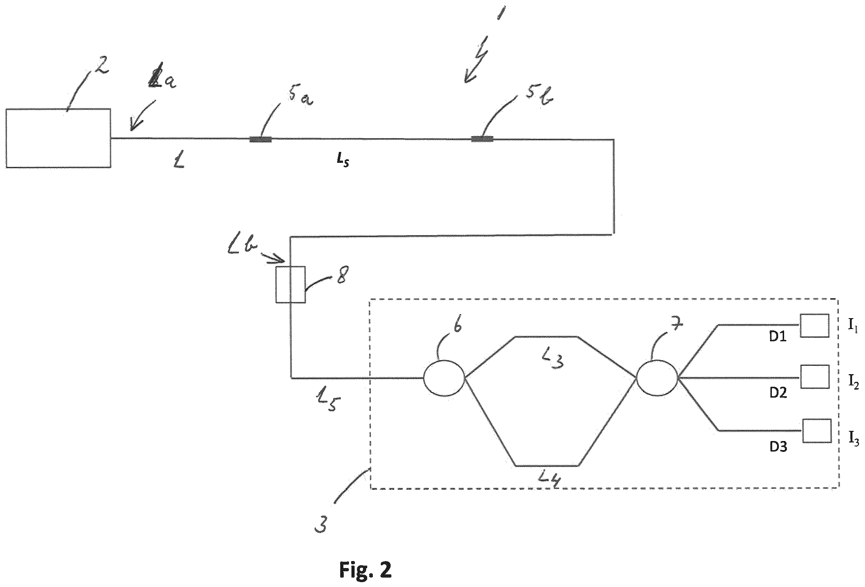

Figure 2 shows a schematic view of a second embodiment of a fiber interferometer measurement system 1 according to the invention. Similar to the first embodiment, the system 1 shown in Fig. 2 includes a broadband type excitation light source 2, a lead fiber L and a detection 3 x 3 interferometer 3. The lead fiber L is provided with a pair of integrated optical reflectors 5a,b defining a sensing fiber section Lₛ therebetween having a variable fiber length. The lead fiber L is associated with the excitation light source 2 for being illuminated by said excitation light source 2. The detection 3 x 3 interferometer 3 is associated with the lead fiber L for converting light received from the pair of integrated optical reflectors 5a,b into a interferometric signal I₁, I₂, I₃.

In the second embodiment, the system 1 further includes an optical filter 8. The lead fiber L is now connected, at a first end La thereof, to the excitation light source 2, while the lead fiber L is connected, at a second end Lb thereof, to the optical filter 8. The system 1 further includes a fifth fiber section L₅ interconnecting the optical filter 8 to the detection 3 x 3 interferometer 3.

In the shown second embodiment, the optical reflectors 5a,b have been implemented as so-called high reflectivity reflectors, e.g. FBGs, forming a Fabry-Perot cavity with the sensing fiber section Lₛ. Now, the detection 3 x 3 interferometer 3 is arranged to have an optical path difference between the optical paths of the third and the fourth fiber path sections L_{3,4}, respectively, converting a wavelength change caused by a length change of the Fabry-Perot cavity 5a,b into a phase change value in the interferometric signal I₁, I₂, I₃. Then, the detection 3 x 3 interferometer 3 is arranged for detecting an optical parameter change, in particular an optical wavelength change, caused by a fiber length change of the sensing fiber section Lₛ, and for converting said optical parameter change into the interferometric signal I₁, I₂, I₃.

Generally, reflected and/or transmitted optical signals travelling from the Fabry-Perot cavity 5a,b towards the detection 3 x 3 interferometer 3 have multiple spectrum peaks in conformity with a fiber length of the sensing fiber section Lₛ. By filtering a single spectrum peak, using the optical filter 8, and forwarding the filtered signal to the detection 3 x 3 interferometer 3, an optical wavelength change caused by a fiber length change can be accurately measured. Advantageously, the optical path difference of the detection 3 x 3 interferometer 3 mainly corresponds to a coherence length of the filtered peak. As an example, a 100 mm optical path difference may be applied to correspond to a 10 pm bandwidth coherence length of the filtered peak.

Similar to the first embodiment, as the measurement to both optical reflectors 5a,b is carried out simultaneously, a common mode signal from the lead fiber Lₛ and the fifth fiber section L5 is eliminated. On the other hand, a measurement of a length change of the variable fiber length of the sensing fiber section Lₛ can be performed.

Further, as the excitation light source 2 in the second embodiment is a broadband type light source, such as a mode locked laser with spectral line spacings smaller than the reflection spectrum of the reflectors, multiplexed measurements are made possible. Wavelength multiplexing can be applied to multiple reflectors pairs operating at mutually different center wavelengths within the broadband spectrum of the light source.

Generally, a spectral width of the broadband excitation light source 2 is broader than a spectral bandwidth of the reflectors 5a,b. In particular, the light source spectrum preferably covers the spectral bandwidth of the reflectors 5a,b to enable proper measurements.

Both the first embodiment shown in Fig. 1 and the second embodiment shown in Fig. 2 can be extended to collect further measurement data.

As an example, the lead fiber L can not only be provided with a first pair of integrated optical wavelength selective reflectors 5a,b having a first central wavelength responsive to the broadband excitation light source, but also with a second pair of integrated optical wavelength selective reflectors having a second central wavelength responsive to the excitation light source. The second pair of integrated optical reflectors can be formed in the lead fiber L at a location beyond the location of the first pair of integrated optical reflectors. Then, multiple wavelength domain multiplexing can be carried out. Optionally, further pairs of integrated optical wavelength selective reflectors responsive to the broadband excitation light source can be applied in a single lead fiber L, exploiting the multiple wavelength domain multiplexing ability of the measurement setup further. In principle, wavelength and/or time domain multiplexing can be applied.

Alternatively or additionally, the broadband excitation light source 2 can be arranged to operate as a pulsed light source, enabling time domain multiplexing as well.

Optionally, an Analogue to Digital Converter ADC included in the detection 3 x 3 interferometer 3 can be optimized by introducing an electronic offset, in particular by matching the range of the ADC to a relevant signal to be measured, thereby removing background noise.

The reflectors 5 may have a reflection spectrum that is uniform or has a Gaussian shape. Alternatively, the reflection spectrum of the reflectors 5 have a non-uniform shape, in particular a pi-shift shape, an asymmetric shape or a relatively broad shape, thereby enabling spectral coding, in analogy to acoustical coded excitation in combination with cross correlation.

The optical phase difference of the third and fourth fiber sections of the detection 3 x 3 interferometer 3 can be fixed or variable. In a particular embodiment, the detection 3 x 3 interferometer 3 may be provided with a path length modulator to optimize the optical phase difference to an optical phase change or an optical wavelength change to be detected.

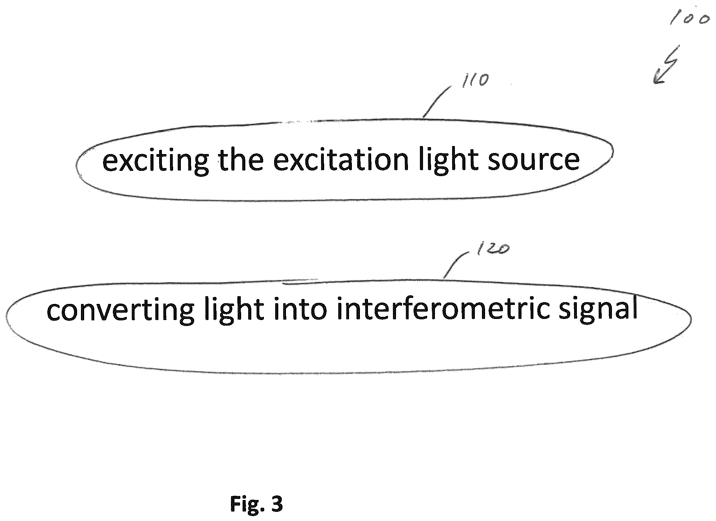

Figure 3 shows a flow chart of an embodiment of the method 100 according to the invention. The method 100 performs a fiber interferometer measurement for measuring a change in a fiber length, using a fiber interferometer measurement system 1 as described above. The method comprises a step of exciting 110 the excitation light source, and a step of converting 120 light received from the pair of integrated optical reflectors into an interferometric signal. Then, in the described embodiments, a phase ϕ can be calculated from the three interference signals I₁, I₂, I₃.

The above described fiber interferometer measurement system can advantageously be used in non-destructive ultrasonic testing, such as for example for the detection of any delamination, damage, stiffness changes and/or rust in large structures such as bridges, industrial structures or offshore structures. Specifically, the fiber interferometer measurement system can advantageously be applied for receiving guided acoustic or elastic waves in non-destructive ultrasonic testing. Using multiplexed reflector pairs, additional information of the acoustic or elastic waves can be deduced.

It is noted that, in principle, the above described fiber interferometer measurement system can also be in other fields, e.g. in geophysical or marine exploration, or in the medical field.

Various variations are possible. It will be clear to the skilled person that the invention is not limited to the exemplary embodiment represented here. Many variations are possible.

Such variants will be apparent for the person skilled in the art and are considered to fall within the scope of the invention as defined in the following claims.

## Claims

1. A fiber interferometer measurement system for measuring a change in a fiber length, comprising:
- an excitation light source;
- a lead fiber provided with a pair of integrated optical reflectors with overlapping reflection spectrum, such as FBGs, defining a sensing fiber section therebetween having a variable fiber length, wherein the lead fiber is associated with the excitation light source for being illuminated by said excitation light source, and
- a detection 3 x 3 interferometer associated with the lead fiber for converting light received from the pair of integrated optical reflectors into an interferometric signal,
wherein the excitation light source is a broadband type light source.

2. A fiber interferometer measurement system according to claim 1, wherein the detection 3 x 3 interferometer is arranged for detecting an optical parameter change, in particular an optical phase change or an optical wavelength change, caused by a fiber length change of the sensing fiber section, and for converting said optical parameter change into the interferometric signal.

3. A fiber interferometer measurement system according to claim 1 or 2, wherein the integrated optical reflectors are low reflectivity type reflectors, wherein the detection 3 x 3 interferometer is arranged to have an optical path difference that is substantially twice the optical length of the sensing fiber section, in particular such that the detection 3 x 3 interferometer is arranged to convert a change in the optical length of the sensing fiber section into a phase change value in the interferometric signal.

4. A fiber interferometer measurement system according to claim 3, wherein a coherence length related to a spectrum of the low reflectivity type reflectors is selected to be shorter than twice the optical length of the sensing fiber section.

5. A fiber interferometer measurement system according to claim 1 or 2, wherein the integrated optical reflectors are high reflectivity type reflectors forming a Fabry-Perot cavity along the sensing fiber section, wherein the detection 3 x 3 interferometer is arranged to have an optical path difference converting a wavelength change caused by a length change of the Fabry-Perot cavity into a phase change value in the interferometric signal.

6. A fiber interferometer measurement system according to any of the preceding claims, wherein a spectral width of the broadband excitation light source is broader than a spectral bandwidth of the reflectors.

7. A fiber interferometer measurement system according to claim 6, wherein the lead fiber is provided with a first pair of integrated optical wavelength selective reflectors having a first central wavelength responsive to the broadband excitation light source, and wherein the lead fiber is further provided with a second pair of integrated optical wavelength selective reflectors having a second central wavelength responsive to the broadband excitation light source.

8. A fiber interferometer measurement system according to any of the preceding claims, wherein broadband excitation light source is arranged to operate as a pulsed light source.

9. A fiber interferometer measurement system according to any of the preceding claims, wherein the broadband excitation light source is a mode locked laser with spectral line spacings smaller than the reflection spectrum of the reflectors.

10. A fiber interferometer measurement system according to any of the preceding claims, wherein a reflection spectrum of the reflectors has a uniform or Gaussian shape.

11. A fiber interferometer measurement system according to any of the preceding claims 1-9, wherein a reflection spectrum of the reflectors has a non-uniform shape, in particular a pi-shift shape, an asymmetric shape or a relatively broad shape.

12. A fiber interferometer measurement system according to any of the preceding claims, wherein the detection 3 x 3 interferometer is provided with a path length modulator.

13. A method of performing a fiber interferometer measurement for measuring a change in a fiber length, using a fiber interferometer measurement system according to any of the preceding claims, comprising a step of exciting the excitation light source, and a step of converting light received from the pair of integrated optical reflectors into an interferometric signal of which the phase is related to the change in the fiber length.
